# EUROPEAN PATENT SPECIFICATION

(11) **EP 1 615 065 B1**
(45) Date of publication and mention of the grant of the patent: **31.01.2007**
(21) Application number: 05107250.2
(22) Date of filing: 05.08.2005
(51) Int. Cl.: G02B 23/12, G01N 25/72

(54) **Infrared camera**
Infrarote Kamera
Caméra infrarouge

(30) Priority: 31.01.2005 CN 52002011 U
(43) Date of publication of application: 11.01.2006
(73) Proprietor: Guangzhou Sat Infrared Technology Co., Ltd., Guangzhou Economic & Techn. Development District Guangzhou 510730 (CN)
(72) Inventor: Zhao, Feiyu Guangzhou Sat Infrared Tech., 510730, Guangzhou (CN); Zhang, Xiaoqing Guangzhou Sat Infrared Tech., 510730, Guangzhou (CN)
(74) Representative: Gervasi, Gemma

(56) References cited:
- EP-A- 1 028 313
- FR-A- 2 834 319
- US-A- 5 637 871
- US-A1- 2003 202 089

## Description

### BACKGROUND OF THE INVENTION

### Field of the Invention

The present invention relates to a camera which can measure the temperature distribution of a given target surface. More particularly the present invention refers to a type of camera which is able to measure the temperature distribution of a target and display it on a LCD display. More particularly again the camera has detachable parts such as the LCD display and the keypad which enable the user to remote control it.

### Background of the technology

If it is necessary to measure the temperature of an object, one way is by directly contacting the object with a thermometer or similar device. In some instances, however, this is not practical. In such cases, it is possible to measure the temperature of an object from a distance using an instrument sensitive to infrared radiation. If the emissivity is known or can be estimated, then the temperature of the object can be determined. Such instruments capable of remote temperature measurement are termed "radiometers." Because infrared radiation is similar to visible light, only having a longer wavelength, it is possible to "see at night" by electronic cameras which respond to infrared wavelengths.

It is possible to combine the concept of a radiometer with that of a thermal imaging system to provide an imaging radiometer. In this way, it is possible to determine the temperature of any and all points in a scene by measuring the infrared radiation emitted by every object in the scene. Such systems have found widespread commercial use in predictive and preventive maintenance in factories. For example, a hot spot in an electrical junction box which is detected by an imaging radiometer can warn of an impending failure. This is only one of the many applications addressed with infrared cameras.

Infrared cameras historically used sensors made of exotic materials that required cooling with liquid nitrogen to a temperature of -195°C. This prevented such cameras to become industrially spread.

A technology breakthrough achieved through researches now makes possible the production of uncooled high performance detectors capable of sensing and measuring infrared energy. This relatively new technology makes possible the development of new, lower cost, and more easily operated infrared imaging devices using a two-dimensional array of detectors. This permits "seeing" the entire scene at once and can produce real-time pictures at TV rates by commercial infrared cameras.

It is known in the field of measuring temperature on remote targets to use infrared cameras which sense the infrared energy radiated by the different surfaces of the target and display the energy spectrum on a viewer or on a screen such as a LCD monitor.

In case the environment requires it, or the user simply wishes, it is also possible to remote control the camera by means of known systems.

Infrared cameras are used in many field of applications: one application is, for instance, visually inspection of electrical systems for a wide range of problems including loose connections, corroded elements, load imbalance, short circuits and other potentially dangerous faults that typically create heat.

Abnormal heating associated with high resistance or excessive current flow is a primary indicator of many problems in electrical systems. Thermal imaging enables the user to see the invisible thermal radiation that may portend impending damage before their condition becomes critical. When current flows in an electrical circuit, part of the electrical energy is converted into heat due to the inherent resistance in all conductive elements. The existence of abnormally high resistance in the circuit or high current flow will result in abnormally high levels of heat to be generated that can be quickly identified with a thermal imager avoiding potential damage to equipment or danger.

An other application may be seen in the Laser Beam Diagnosis: for many applications, it is extremely important to know the cross-sectional profile of a laser beam. In this way, the power, energy density, modal structure and divergence of the laser can be determined. These properties impact the propagation of the beam in a wide variety of applications and ultimately determine the usefulness of the laser in each application. Infrared imagers offer an ideal method for analyzing laser beam profiles from 800 nm to 20 microns.

Also in many industrial processes it is important to know, see and measure the temperature distribution of products subjected to the processes: for instance many high-energy processes such as petrochemical and chemical processing, cement processing and incineration utilize refractory insulation. The condition of the refractory can have both serious safety consequences as well as an impact to product quality. Frequent inspection with thermal imaging is critical in order to reducing problems and maintaining optimal system performance.

One example of this known prior art disclosed in W003098310. It chiefly includes the camera's main body and a remote handset. The LCD is fixed on the main body and the remote handset is one among others of the accessories of the camera. If it is desired to use the LCD on the remote handset, it is necessary to dismounted it from the main body and to connect it on the handset in order to realize the remote controlled function. Such a process is long, complex and makes the remote controlled camera not easy to operate. Furthermore the fact that the accessories are detached may yield to losses of important accessories and makes the whole camera system bulky and difficult to carry.

See also the infrared cameras disclosed in EP 1 028 313, FR 2 834 319 and US 2003/202 089.

In view of the above, it will be apparent to those skilled in the art from this disclosure that there exists a need for an improved infrared camera with a LCD screen and a controller that overcomes the problems of the conventional art discussed above.

This invention addresses this need in the art as well as other needs, which will become apparent to those skilled in the art from this disclosure.

### Summary of the invention

An object of the present invention is to provide an improved infrared camera according to claim 1.

Said LCD screen may be hinged to said handset by means of a hinge.

To plug the wire to the main body of the infrared camera a socket may be arranged at the far end of said wire opposite to said LCD screen.

Said handset may have a chute located at its bottom and said handle may show a slideway matching the form of said chute, so that said handset can slide along said handle.

In order to prevent said handset from sliding away inadvertently from said handle said slideway may comprise a fixing pin.

It is preferable that said wire have a spiral form.

### Brief description of the drawings

Referring now to the attached drawings which form a part of this original disclosure:
FIG. 1 is a side view of one infrared camera according to the invention;
FIG. 2 is a cutaway view taken along the plane A-A;
FIG. 3 is a perspective view of the handle of one infrared camera according to the invention;
FIG. 4 is a perspective view of the detachable LCD screen;
FIG. 5 represents a particular component of one infrared camera according to the invention.

### Detailed description of the preferred embodiments

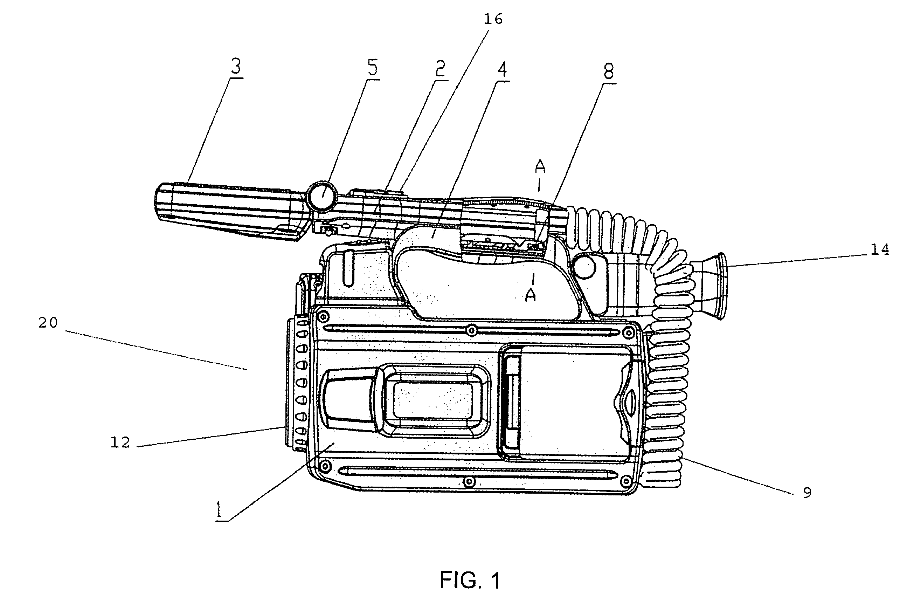

With reference to FIG. 1 there is depicted a preferred embodiment of the infrared camera (20) according to the invention. The camera includes the main body (1); on top of it is arranged the handle (2), by means of which the camera can be carried by the user. The camera (20) includes conventional parts such as lenses (12) and viewfinder (14).

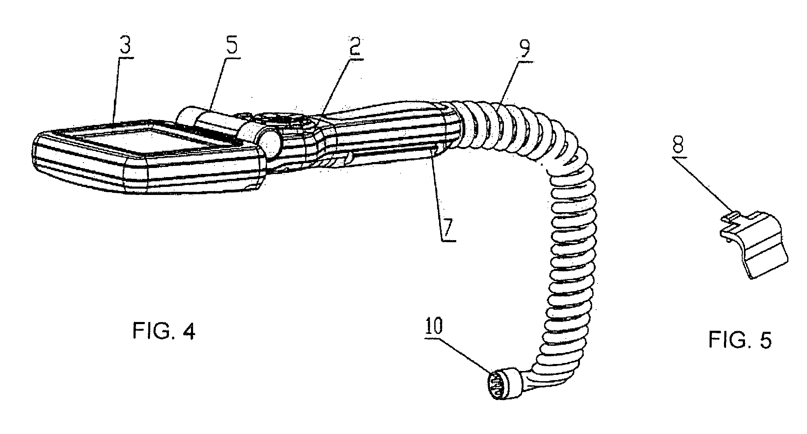

The LCD screen (3), which shows the images and the temperature distribution of the objects taken by the camera (20), is not fixed directly to the main body (1) of the camera (20), but is detachable from the camera (20) by means of the fact that it is electrically connected to the camera (20) by means of the cable (9) which at its end opposite to the LCD screen (3) has a socket (10, FIG. 4) which electrically connects the cable to the camera (20). With this solution the user can displace the LCD screen (3) from the camera (20) and place it in a better position. This can be very useful or even necessary in case, for instance, the visibility is jeopardized in certain places, or the environment conditions prevent the user from being near the camera (20). In order to allow the maximal freedom of positions, the LCD screen (3) is connected to the handset (2) by means of the hinge (5) so that the LCD screen (3) can assume all possible angles with reference to the handset (2).

In the handset (2) there is arranged the keypad (16) of the camera (20) necessary to control the camera (20) so that the user can completely control the camera (20) even with the LCD screen (3) displaced from it.

In case the user does not desire to displace the LCD screen (3) from the camera (20), it is foreseen to fix the LCD screen to the camera (20).

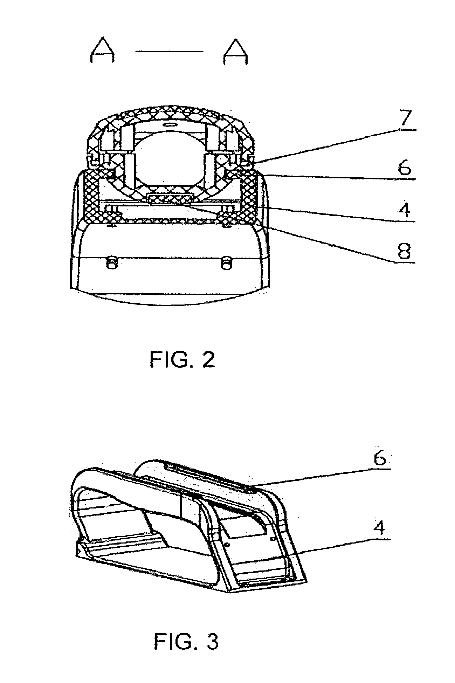

The handle (4) is configured to have a slideway (6) with a sectional profile that matches the chute (7) located at the bottom of the handset (2), as best seen in FIG. 2 and FIG. 3. The user simply has to slide the handset (2) along the slideway (6) of the handle (4). In order to prevent the handset (2) from sliding away inadvertently from the handle (4) there is arranged a fixing pin (8, FIG. 5) on the rear end of the slideway (6), so that the handset (2) is integrally fixed to the handle (4) and consequently to the camera (20). In this position the camera (20) according to the invention can be used as a conventional infrared camera.

In case the user desires to displace the LCD screen (3) from the camera (20) he simply releases the fixing pin (8) and slides the handset (2) from the handle (4). After that he can control the camera (20) and monitor the images on the LCD screen (3).

## Claims

1. An infrared camera (20) having a main body (1), a LCD screen (3), a keypad (16) for controlling the infrared camera (20), and a handle (4), **whereby** the LCD screen (3) is **electrically** connected to said main body (1) of said infrared camera (20) by means of a cable (9),
**characterized in that**
said keypad (16) is located on a handset (2) connected to said LCD screen (3), and **in that said handset (2) is detachably connectable to said main body (1) of said infrared camera** such that said LCD screen (3) and said key pad (16) are detachable remote parts of said infrared camera (20).

2. An infrared camera (20) according to claim 1, **characterized in that** said LCD screen (3) is hinged to said handset (2) by means of a hinge (5).

3. An infrared camera (20) according to claim 1, **characterized in that**
a socket (10) is arranged at the far end of said cable (9) opposite to said LCD screen, so that said cable (9) can be plugged to said main body (1) of said infrared camera (20).

4. An infrared camera (20) according to claim 1, **characterized in that**
said handset (2) has a chute (7) located at its bottom and **in that** said handle (4) shows a slideway (6) matching the form of said chute (7), so that said handset (2) can slide along said handle (4).

5. An infrared camera (20) according to claim 4, **characterized in that**
In said slideway (6) there is provided a fixing pin (8) in order to prevent said handset (2) from sliding away inadvertently from said handle (4).

6. An infrared camera (20) according to claim 1, **characterized in that**
said cable (9) has a spiral form.

## Patentansprüche

1. Infrarotkamera (20) mit einem Hauptkörper (1), einem LCD-Bildschirm (3), einem Tastenfeld (16) zum Steuern der Infrarotkamera (20) und einem Griff (4), wobei der LCD-Bildschirm (3) mittels eines Kabels (9) mit dem genannten Hauptkörper (1) der genannten Infrarotkamera (20) elektrisch verbunden ist, **dadurch gekennzeichnet, dass**
sich das genannte Tastenfeld (16) an einem mit dem genannten LCD-Bildschirm (3) verbundenen Handapparat (2) befindet und dass der genannte Handapparat (2) abnehmbar mit dem genannten Hauptkörper (1) der genannten Infrarotkamera verbunden werden kann, so dass der genannte LCD-Bildschirm (3) und das genannte Tastenfeld (16) abnehmbare ferne Teile der genannten Infrarotkamera (20) sind.

2. Infrarotkamera (20) gemäß Anspruch 1, **dadurch gekennzeichnet, dass** der genannte LCD-Bildschirm (3) mittels eines Scharniers (5) an dem genannten Handapparat (2) angelenkt ist.

3. Infrarotkamera (20) gemäß Anspruch 1, **dadurch gekennzeichnet, dass**
an dem fernen Ende des Kabels (9), das dem genannten LCD-Bildschirm entgegengesetzt ist, eine Buchse (10) angeordnet ist, sodass das genannte Kabel (9) in den genannten Hauptkörper (1) der genannten Infrarotkamera (20) gesteckt werden kann.

4. Infrarotkamera (20) gemäß Anspruch 1, **dadurch gekennzeichnet, dass**
der genannte Handapparat (2) eine Rinne (7) besitzt, die sich an seiner Unterseite befindet, und dass der genannte Griff (4) eine Gleitbahn (6) zeigt, die an die Form der genannten Rinne (7) angepasst ist, sodass der genannte Handapparat (2) entlang des genannten Griffs (4) gleiten kann.

5. Infrarotkamera (20) gemäß Anspruch 4, **dadurch gekennzeichnet, dass**
in der genannten Gleitbahn (6) ein Befestigungsstift (8) vorgesehen ist, um zu verhindern, dass der genannte Handapparat (2) versehentlich von dem genannten Griff (4) abgleitet.

6. Infrarotkamera (20) gemäß Anspruch 1, **dadurch gekennzeichnet, dass**
das genannte Kabel eine (9) Spiralform aufweist.

## Revendications

1. Une caméra infrarouge (20) ayant un corps (1), un écran LCD (3), un clavier (16) pour commander la caméra infrarouge (20), une poignée (4), où l'écran LCD est connecté de façon électrique au moyen d'un câble (9) au corps principal (1) de ladite caméra infrarouge (20), **caractérisé en ce que** ledit clavier (16) est situé sur un handset (2) connecté audit écran LCD (3) et **en ce que** ledit handset (2) est susceptible d'être connecté audit corps principal (1) de ladite caméra infrarouge (20) de manière à ce que ledit écran LCD (3) et ledit clavier (16) sont des pièces distantes détachables de ladite caméra infrarouge (20).

2. Une caméra infrarouge (20) selon la revendication 1, **caractérisé en ce que** ledit écran LCD (3) est articulé audit handset (2) au moyen d'une charnière (5).

3. Une caméra infrarouge (20) selon la revendication 1, **caractérisé en ce qu'**une interface de connexion (10) est disposée sur l'extrémité dudit câble (9) opposée audit écran LCD , de manière à ce que le câble (9) peut être branché audit corps principal (1) de ladite caméra infrarouge (20).

4. Une caméra infrarouge (20) selon la revendication 1, **caractérisé en ce que** ledit handset (2) comporte un conduit (7) situé dans son fond et **en ce que** ladite poignée (4) montre une glissière (6) correspondant à la forme dudit conduit (7), de manière à ce que ledit handset (2) peut glisser le long de ladite poignée (4).

5. Une caméra infrarouge (20) selon la revendication 4, **caractérisé en ce qu'**une tige de fixation (8) est pourvue dans ladite glissière pour empêcher ledit handset (2) de glisser de façon involontaire de ladite poignée (4).

6. Une caméra infrarouge (20) selon la revendication 1, **caractérisé en ce que** ledit cable (9) présente une forme hélicoïdale.
